# EUROPEAN PATENT SPECIFICATION

(11) **EP 3 139 742 B1**
(45) Date of publication and mention of the grant of the patent: **28.03.2018**
(21) Application number: 15724063.1
(22) Date of filing: 05.05.2015
(51) Int. Cl.: A01N 43/60, A01P 17/00, A01N 37/44, A01N 65/42, A01N 65/28

(54) **PEST REPELLENTS AND THEIR USE**
SCHÄDLINGSBEKÄMPFUNGSMITTEL UND DEREN VERWENDUNG
RÉPULSIFS ANTI-PARASITES ET LEUR UTILISATION

(30) Priority: 07.05.2014 BE 201400330
(43) Date of publication of application: 15.03.2017
(73) Proprietor: Globachem NV, 3800 Sint-Truiden (BE)
(72) Inventor: DENRUYTER, Lieven, B-3800 Sint-Truiden (BE); QUAGHEBEUR, Koen, B-3800 Sint-Truiden (BE)
(74) Representative: LC Patents
(86) International application number: PCT/IB2015/053277
(87) International publication number: WO 2015/170255

(56) References cited:
- WO-A1-94/04027
- WO-A1-99/37152
- WO-A1-2004/089090
- BE-A3- 1 019 117
- TIM GUILFORD ET AL: "The biological roles of pyrazines: evidence for a warning odour function", BIOLOGICAL JOURNAL OF THE LINNEAN SOCIETY, vol. 31, no. 2, 1 June 1987 (1987-06-01), pages 113-128, XP055141489, ISSN: 0024-4066, DOI: 10.1111/j.1095-8312.1987.tb01984.x
- SAXTON VALERIE P ET AL: "Response of blackbirds (Turdus merula) and silvereyes (Zosterops lateralis) to geraniol and 2-methoxy-3-isobutylpyrazine", AMERICAN JOURNAL OF ENOLOGY AND VITICULTURE, AMERICAN SOCIETY FOR ENOLOGY AND VITICULTURE, US, vol. 55, no. 3, 1 January 2004 (2004-01-01), pages 292-294, XP009180222, ISSN: 0002-9254
- MOORE B P & BROWN W V: "Identification of warning odour components, bitter principles and antifeedants in an aposematic beetle: Metriorrhynchus rhipidius (Coleoptera: Lycidae)", INSECT BIOCHEMISTRY, LONDON, GB, vol. 11, no. 5, 1981, pages 493-499, XP023401031, ISSN: 0020-1790, DOI: 10.1016/0020-1790(81)90016-0 [retrieved on 1981-01-01]
- Michael L Avery ET AL: "Food Avoidance by Red-Winged Blackbirds Conditioned with a Pyrazine Odor", The Auk, 1 July 1990 (1990-07-01), pages 544-549, XP055141508, Retrieved from the Internet: URL:http://www.jstor.org/stable/10.2307/40 87917?origin=api [retrieved on 2014-09-19]
- H J BESTMANN ET AL: "Flüchtige Inhaltsstoffe von Cvotalaria ochvoleuca und deren Wirkung auf Schadinsekten* Volatile Constituents from Crotalaria ochroleuca and Their Effect on Pest Insects", Z. NATURFORSCH,, vol. 46c, no. 7, 1 January 1991 (1991-01-01), pages 579-584, XP055141201, Tübingen
- HILE A G ET AL: "Aversion of European Starlings (Sturnus vulgaris) to Garlic Oil Treated Granules: Garlic Oil as an Avian Repellent. Garlic Oil Analysis by NMR Spectroscopy", JOURNAL OF AGRICULTURAL AND FOOD CHEMISTRY, AMERICAN CHEMICAL SOCIETY, US, vol. 52, no. 8, 26 March 2004 (2004-03-26) , pages 2192-2196, XP002389755, ISSN: 0021-8561, DOI: 10.1021/JF035181D

## Description

### TECHNICAL FIELD OF THE INVENTION

The present invention relates to a method for repelling pests in a crop, wherein a composition comprising 2-isopropyl-3-methoxypyrazine (IPMP) is prepared and applied above the ground as a pest repellent, particularly a pest repellent against vertebrates that feed on parts of vegetative plants above the ground. The present invention is also intended to provide a method of repelling pests in a crop, in which a composition containing IPMP and at least one additional pest-repelling substance is prepared, and wherein this composition is applied above the ground. This involves in particular the forms of administration and the synergistic combinations of IPMP with other repellents, in particular the combination of IPMP with a repellent selected from the group comprising denatonium benzoate, onion extract, other plant extracts (for example eucalyptus), or combinations thereof, or with the combination of Bitrex with onion extract or other plant extracts.

### BACKGROUND OF THE INVENTION

The compound 2-isopropyl-3-methoxy-pyrazine was identified earlier as a ladybird pheromone and was described as an attractant for insects of the Coccinellidae family (WO9937152). Bestmann et al. (Z. Naturforsch. 1991, 46c, p.579-584) instead use 2-methoxy-3-isopropyl-pyrazine (MIPP) and 2-methoxy-3-isobutyl-pyrazine (MIBP) containing seeds to repel several insects.

The use of 2-methoxy-3-alkyl-pyrazines as a deterrent against birds when applied in their food are drinking water has been well defined in literature. Guilford et al., (Biol J Linnean Soc1987, 31 p.113-128) describe the use of MIBP as a deterrent for hatching chicks, when applied in their drinking water. The same compound has been used in a sugar solution to deter Blackbirds and Silvereyes (Saxton et al. Am J Enol Vitic 2004, 55:3 p.292-294). Furthermore, 2-methoxy-3-alkyl-pyrazines have been used to deter other birds, as indicated by Moore & Brown (Insect Biochem 1981, 11,5 p.493-499) and Avery et al. (The Auk, 1990, 107, p.544-549) It is indicated clearly in WO9937512 that application of this substance as a pest control agent requires slow release of the substance from a matrix, substrate or microcapsule, such that the chemical substance is protected from the weather and UV radiation (see p. 1 lines 26-29 of WO9937152).

It is therefore not surprising that in a later investigation into the use of this substance as a mole repellent, the substance was always applied underground and by means of an impregnated carrier. In this application, which is described extensively in the International patent application WO2004/089090, impregnated latex carriers are introduced into a mole tunnel in order to repel the moles.

Managing plant pests in agriculture and horticulture continues to be necessary within the context of integrated pest control. In this search there is a need for substances that can affect the pests without detrimental effects for, for example, the living environment and beneficial insects and creatures in the crop in question. It is also an objective of the present invention to offer a solution for this by providing pest repellents that can be applied above the ground, in particular by offering pest repellents that have an effect against vertebrates that feed on parts of vegetative plants above the ground.

### SUMMARY OF THE INVENTION

The present invention is based on the discovery that, notwithstanding the application described earlier of IPMP as a mole repellent and an attractant for Coccinellidae, wherein the IPMP has to be formulated in a formulation with slow release and protection against weather and UV radiation, it is still possible to apply IPMP as a repellent above the ground, even in simple formulations. As is shown by the following examples, even the application of a watery IPMP solution, of paint containing IPMP or of wooden dowels impregnated with a solution containing IPMP has a long-term pest-repelling effect in a crop against wild boars, hares and rabbits.

The first objective of the present invention is to provide a method for repelling a pest in a crop, in particular by preventing damage to a crop by one or more vertebrate creatures, in particular by preventing damage to a crop by one or more vertebrate creatures selected from even-toed ungulates and Lagomorpha. The method includes (a) preparing a composition comprising substances derived from alkyloxypyrazine according to formula (I) 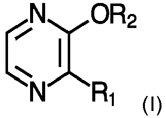 wherein R₁ is hydrogen or C₁₋₄alkyl; and R₂ is C₁₋₄alkyl (hereinafter also called a pest repellent composition), and (b) applying this composition in the crop above the ground.
In one embodiment of the present invention, the substance according to formula (I) is further characterised in that R₁ is hydrogen or a C₁₋₄alkyl selected from methyl, ethyl, propyl, isopropyl, butyl, iso-butyl, sec-butyl or *tert*-butyl; in particular R₁ is a C₁₋₄alkyl selected from methyl, ethyl, propyl, isopropyl, butyl, iso-butyl, *sec*-butyl or *tert*-butyl; more particularly R₁ is isopropyl.
In one embodiment of the present invention, the substance according to formula (I) is further characterised in that R₂ is a C₁₋₄alkyl selected from methyl, ethyl, propyl, isopropyl, butyl, iso-butyl, sec-butyl or *tert*-butyl; in particular R₂ is methyl.
In one embodiment of the present invention, the substance according to formula (I) is selected from 2-isopropyl-3-methoxy-pyrazine, 2-*sec*-butyl-3-methoxy-pyrazine, or combinations thereof. In one particular embodiment the substance according to formula (I) comprises 2-isopropyl-3-methoxy-pyrazine, also known as IPMP.

Apart from the aforementioned alkoxypyrazine derivatives, the pest repellent can also contain further pest-repelling substances, such as for example denatonium benzoate (also known as Bitrex®) or onion extract or other plant extracts for which clear synergetic effects have been established. Bitrex is described as the world's bitterest substance, and is added to certain products such as cleaning products, slug pellets and pesticides in order to prevent consumption. Onion extract and other plant extracts (such as eucalyptus, for example) are recognised repellents that are mainly used against insects, but there are other known examples that can be found for applications against mammals. Thus in a further embodiment the invention provides a method of repelling a pest in a crop, comprising preparing a pest-repellent composition for application above the ground, comprising a substance according to formula (I), and at least one additional pest-repelling substance, and the application of this composition above the ground. In this composition the substance according to formula (I) can be in any of the aforementioned forms. In this composition the additional pest-repelling substance is preferably selected from denatonium benzoate, onion extract or other plant extracts, and/or combinations thereof. Since this application is about the application above the ground of alkoxypyrazine derivatives for repelling pests in a crop, the target group is also directed at pests that cause damage to crops above the ground and is not directly about insects but rather directed to mammals. The method for repelling pests in a crop by preparing and applying above the ground the aforementioned alkoxypyrazine derivatives or the aforementioned pest-repelling compositions has been shown to be particularly useful against damage by even-toed ungulates and Lagomorpha. Where the even-toed ungulates are concerned, we are thinking in particular of ruminants such as goats, sheep and deer, and members of the pig family such as domestic pigs and wild boars. The invention also provides a method for repelling pests in a crop comprising preparing and applying above the ground the aforementioned alkoxypyrazine derivatives or the aforementioned pest-repelling compositions against being bitten by pests that damage crops above the ground, in particular against being bitten by even-toed ungulates and Lagomorpha. As has already been stated, this concerns application above the ground in crops including grassland, food crops (agriculture and horticulture), ornamental crops (such as cut flowers, shrubs and trees), and suchlike. One embodiment of the present invention is about a method for repelling pests in a crop comprising preparing and applying above the ground the aforementioned alkoxypyrazine derivatives or the aforementioned pest-repelling compositions above the ground; or of the aforementioned pest-repelling compositions against ruminants, members of the pig family and Lagomorpha; more particularly against goats, sheep, cattle, deer, pigs, wild boars and Lagomorpha such as hares and rabbits.

The objective of the present invention is therefore to provide a method for repelling pests in a crop, in particular by preventing damage to a crop by one or more of the aforementioned vertebrate animals, this method comprising: preparing a composition comprising a substance according to formula (I) as described herein; and applying this composition in the crop above the ground. The composition for use in the aforementioned method can be a liquid or solid composition. The person skilled in the art is aware that the method of application of the composition in the crop is partly determined by the form the pest-repelling composition takes. In this way a liquid composition can be applied by spraying, atomising or spreading it on and/or between the crop. Spreading the composition is preferably by applying it to the crop, for example on the stems of the crop. In the case of a solid composition, application can be by dispersal, but also by adhering it to / hanging it up in the crop. Persons skilled in the art are familiar with the possible ways in which the aforementioned compositions in solid form can be obtained. One of the possibilities, for example, is that the solid composition can be obtained by impregnating a solid carrier, for example a biodegradable carrier, with a substance or liquid pest-repelling composition according to the present invention.

### BRIEF DESCRIPTION OF THE INVENTION

As shown by the above, this application provides a method for repelling pests in a crop, comprising preparing pest-repelling compositions and applying them above the ground for repelling pests in the crop. As well as the aforementioned active ingredients, the pest-repelling composition can also contain formulation additives that are typically used in the production of vegetative treatment products and are not toxic for plants. The following additives can be added, for example.
- Non-ionic and anionic emulsifiers such as polyoxyethylene fatty acid esters, polyoxyethylene fatty alcohol, polyoxyethylene ethers and alkyl aryl surfactants. Other suitable emulsifiers can be found in McCutcheon's Detergents & Emulsifiers (1982), North American Edition, MC Publishing Co, Glen Rock, NJ
- Antioxidants such as sterically hindered phenols and alkyl-substituted hydroxyanisoles and hydroxytoluenes, PERMALUX®, Neozone® A or D, TOPANOL CA®, N,N'-diphenyl-1,4-phenylenediamine and other substituted phenylenediamines.
- Thickeners such as organic polymers such as partly or wholly neutralised polyacrylic acids, polyethylene glycols, polyethylene glycols, polyvinyl alcohols and non-ionic or ionic modified cellulose, xanthan-based thixotropic thickeners, waxes and inorganic dispersion thickeners, such as precipitated or pyrogenic silica, kaolin, bentonite and aluminium / -silicium mixed oxides.
- Antifreezes such as urea, glycerol or propylene glycol.
- Fillers such as stone chippings, calcium carbonate, quartz chippings and aluminium / silicium mixed oxides or mixed hydroxides.
- Solvents, such as glycols, such as propylene glycol and polyethylene glycols with various molecular weights, ketones such as methyl isobutyl ketone, methyl isopropyl ketone and cyclohexanone, amides such as dimethyl formamide or diethyl formamide, N,N-alkalised carboxamides; alkyl lactams, such as substituted pyrrolidones and caprolactam hydrocarbons, n-paraffins and isoparaffins with different boiling ranges are available, aromatic hydrocarbons, such as xylene and aromatic distillation fractions, esters, such as propylene glycol monomethyl ether acetate, dibutyl adipate and di-n-butyl phthalate, ethers, such as propylene glycol methyl ether or propylene glycol butyl ether, alcohols, such as ethanol, n-propanol and i-propanol, n-butanol and i-butanol, n-amyl alcohol and i-amyl alcohol, benzyl alcohol, tetrahydrofurfuryl alcohol, 1-methoxy-2-propanol and higher alcohols and dimethyl sulfoxide, dioxane end tetrahydrofuran. The solvents can be applied in the form of individual components or mixtures. Particularly preferred are those that are miscible with UV stabilisers and are not unnecessarily volatile.

In general, additives are added in concentrations of 0 to about 50% by weight, preferably between 0 and about 25% and if possible at 0.1 to about 5%. Ultraviolet (UV) absorbers can also be added. The UV-absorbers can be solid or liquid, and preferably have an absorption range of 270-400 nm. Representative UV-absorbers are 2-H-benzotriazoles, 2-hydroxy-alkoxy benzophenones, oxalanilides, cinnamic acid and derivatives thereof, and triazines and derivatives thereof. UV-absorbers are present in general in concentrations of approximately 1 to 50% by weight, preferably between 5 and 30% by weight.
UV-blockers such as soot, iron oxide, titanium dioxide, zinc oxide, calcium carbonate, talc, etc. and pigments such as Sudan black, chromophthalic blue, Terasil blue and yellow Cibacet, can also be used.

It will be clear to the person skilled in the art that the pest-repelling compositions that are prepared and used in the method according to the present invention can be formulated in accordance with the desired manner of application in the crop, and/or in accordance with the pest to be combated as shown in the examples below. In a special embodiment the compositions according to the invention will be applied to trees, plants or crops in the form of sprays, droplets, microfilms, microcapsules or thin coatings, which are applied to the crops using conventional equipment with which experts are familiar. The compositions for these applications can be formulated for controlled release. The formulation can be in the form of a dispersion coating, a film coating, a spray coating, micro-encapsulated products, polymer drops with delayed release, globs, blocks, such as paraffin blocks, monoliths and all other similar known forms.
Also suitable for treating fruit trees is a process wherein a certain quantity of the compositions according to the invention is applied on the surface or the stem of the plants using dosage dispensers, pipettes, sprays, air or surface sprayers, brush equipment and the like, so as to distribute the compositions over substantially the entire area of the crop.
It is also possible to put the compositions according to the invention on a solid carrier and/or the surface of a carrier. The material so obtained can be distributed in the crop whether or not the carrier is broken up or made smaller.
Various controlled release systems that are suitable for delivering compositions according to the invention are described for example in 'Controlled Delivery of Crop-Protection Agents', Taylor and Francis, New York, (1990), Editor R. M. Wilkins, especially chapters 3 and 9, and in 'Insect Suppression with Controlled Release Pheromone Systems', Vol. I and II, CRC Press, Boca Raton, Fla. (1982). These release systems comprise hollow fibres and porous polymer substrates and foams, monolithic (dissolved or dispersed) systems, including erodable, erosion-sensitive or degradable and laminated structures. Monolithic systems, that can be used within the protection scope of the present invention comprise various types of rubber and other elastomers and plastics such as poly(vinylchloride), polyethylenes, polypropylenes, polyacrylates , poly(vinylacetate), polyamides, polyesters, polycarbonates, polyurethanes and different combinations of the polymers. Other formulations that can be used within the protection scope of the present invention comprise a micro-encapsulated or macro-encapsulated form. To this end the active ingredients according to the invention are encapsulated in a suitable polymer or mixed polymers of synthetic or natural origin and the active ingredients, i.e. a substance according to formula (I), and optional additional pest-repelling substances, will be released in a slow or controlled manner through the walls of microcapsules or macrocapsules. The compounds can also be included in a granular material that is able to release the substances slowly and in a controlled manner. The granular material can consist of small particles of inorganic carriers and/or organic polymers such as are familiar to an expert in the professional field. Other suitable formulations include hollow fibres, laminated structures, ropes of various materials and wooden carriers that will release the substances slowly.

### EXAMPLES

### Example 1 - Pest repellent to deter wild boars

Wooden dowels (length 40 mm, ø 10 mm) were impregnated by laying them in a hexane solution with IPMP overnight. The lid was removed the day after so that the hexane could evaporate. In this way only the dowels remained, impregnated with 5.33 % by weight of IPMP. Dowels were laid out at 1 per 50 m² on an airfield where wild boars were causing a nuisance. No more wild boars were seen in the next few months.

### Example 2 - Pest repellent to deter hares

A similar test was set up in a newly-planted apple orchard (Jonagold variety) where hares had caused a great deal of bite damage to the tree trunks, with four objects: 1. untreated, 2. latex paint smeared on the tree trunk, 3. latex paint + 0.06% IPMP smeared on the tree trunk, 4. latex paint + 0.12% IPMP smeared on the tree trunk. The percentage of newly-damaged tree trunks was determined after 60 days.

**Table 1 - Bite damage to tree trunks**

| | | % damage 12/02 |
|---|---|---|
| **1**. | Untreated | 79 |
| **2**. | Latex | 29 |
| **3**. | Latex + IPMP 0.06% | 8 |
| **4**. | Latex + IPMP 0.12% | 0 |

Tree trunks that were smeared with IPMP were clearly less damaged by biting.

### Example 3 - Pest repellent to deter rabbits

A similar test was set up in a newly-planted pear orchard (Conference variety) where rabbits had caused a great deal of bite damage to the tree trunks, with three objects: 1. untreated, 2. latex paint + IPMP 0.06% + denatonium benzoate 0.025% + onion extract 1%, 3. latex paint + thiophanate-methyl 14% smeared on the tree trunk. The percentage of tree trunks newly damaged by biting was determined after 60 days.

**Table 2 - Bite damage to tree trunks**

| | | % damage 12/02 |
|---|---|---|
| **1**. | Untreated | 92 |
| **2**. | Latex | 0 |
| | + IPMP 0.06% | |
| | + denatonium benzoate 0.025% | |
| | + onion extract 1% | |
| **3**. | Latex | 33 |
| | + thiophanate-methyl 14% | |

Tree trunks that were smeared with the IPMP latex composition were not damaged by biting. What was further noticeable was that the ground near other treated objects in the test had been dug up by the rabbits in order to be able to bite the unsmeared trunks. This was not the case for the IPMP latex composition.

## Claims

1. A method for repelling pests in a crop, comprising:
a) preparing a composition comprising a substance according to formula (I); 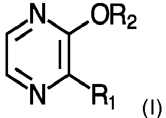 wherein R₁ is hydrogen or C₁₋₄alkyl; and R₂ is C₁₋₄alkyl; and
b) the application above the ground of this composition within the crop; wherein the pests are even-toed ungulates and Lagomorpha that cause bite damage to crops above the ground.

2. The method for repelling pests in a crop according to claim 1 wherein R₁ is isopropyl and R₂ is methyl.

3. A method for repelling pests in a crop, comprising:
a) preparing a composition comprising a substance according to formula (I) as defined in claim 1 or 2, and at least one additional pest-repelling substance; in particular selected from denatonium benzoate and plant extracts such as onion extract or eucalyptus extract; and
b) the application above the ground of this composition within the crop; wherein the pests are even-toed ungulates and Lagomorpha that cause bite damage to crops above the ground.

4. The method according to claim 1, 2 or 3, wherein the composition is a liquid composition or a solid composition.

5. The method according to claim 1, 2 or 3, wherein the composition is a liquid composition and is applied above the ground in the crop by means of spraying on and/or between the crop.

6. The method according to claim 1, 2 or 3, wherein the composition is a liquid composition and is applied above the ground in the crop by means of spreading the composition on the crop, in particular on the stems of the crop.

7. The method according to claim 1,2 or 3, wherein the composition is a solid composition, obtained by impregnating a solid carrier with a substance according to formula (I) as defined in claim 1 or 2.

8. The method according to claim 7, wherein the solid composition is applied within the crop by dispersal.

## Patentansprüche

1. Ein Verfahren zur Abwehr von Schädlingen in einem Pflanzenbestand, das folgendes umfasst:
a) Herstellung einer Zusammensetzung, die eine Substanz entsprechend der folgenden Formel (I) umfasst: 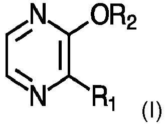 wobei R₁ Wasserstoff oder C₁₋₄Alkyl ist und R₂ C₁₋₄Alkyl ist; und
b) Anwendung dieser Zusammensetzung über dem Boden innerhalb des Pflanzenbestandes; wobei die Schädlinge Vögel, Paarhufer und Lagomorpha sind, die Verbissschäden an Kulturpflanzen über dem Boden verursachen.

2. Das Verfahren zur Abwehr von Schädlingen in einem Pflanzenbestand nach Anspruch 1, wobei R₁ Isopropyl und R₂ Methyl ist.

3. Ein Verfahren zur Abwehr von Schädlingen in einem Pflanzenbestand, das folgendes umfasst:
a) Herstellung einer Zusammensetzung, die eine Substanz entsprechend der Formel (I) umfasst, wie in Anspruch 1 oder 2 definiert, und mindestens eine zusätzliche schädlingsabwehrende Substanz; insbesondere aus Denatoniumbenzoat und Pflanzenextrakten wie Zwiebelextrakt oder Eukalyptusextrakt ausgewählt; und
b) Anwendung dieser Zusammensetzung über dem Boden innerhalb des Pflanzenbestandes; wobei die Schädlinge Vögel, Paarhufer und Lagomorpha sind, die Verbissschäden an Kulturpflanzen über dem Boden verursachen.

4. Das Verfahren nach Anspruch 1, 2 oder 3, wobei die Zusammensetzung eine flüssige Zusammensetzung oder eine feste Zusammensetzung ist.

5. Das Verfahren nach Anspruch 1, 2 oder 3, wobei die Zusammensetzung eine flüssige Zusammensetzung ist und über dem Boden in dem Pflanzenbestand durch Sprühen auf und/oder zwischen die Kulturpflanzen angewendet wird.

6. Das Verfahren nach Anspruch 1, 2 oder 3, wobei die Zusammensetzung eine flüssige Zusammensetzung ist und über dem Boden in dem Pflanzenbestand durch Verteilung der Zusammensetzung auf den Kulturpflanzen, insbesondere auf den Stängeln der Kulturpflanzen, angewendet wird.

7. Das Verfahren nach Anspruch 1, 2 oder 3, wobei die Zusammensetzung eine feste Zusammensetzung ist, die durch Imprägnieren eines festen Trägers mit einer Substanz gemäß der Formel (I) wie in Anspruch 1 oder 2 definiert ist, gewonnen wurde.

8. Das Verfahren nach Anspruch 7, wobei die feste Zusammensetzung innerhalb des Pflanzenbestandes durch Verstreuung angewendet wird.

## Revendications

1. Un procédé pour repousser les nuisibles d'une culture, englobant :
a) La préparation d'un composé comprenant une substance selon la formule (I) ; 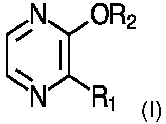 dans laquelle R₁ représente l'hydrogène ou C₁₋₄alkyle ; et R₂ est C₁₋₄alkyle ; et
b) L'application de ce composé au-dessus du sol dans la culture ; dans laquelle la nuisance est causée par des oiseaux, des artiodactyles et des lagomorphes qui causent des dégâts de morsure aux cultures qui se trouvent au-dessus du sol.

2. Le procédé pour repousser les nuisibles d'une culture selon la revendication 1, dans lequel R₁ est l'isopropyle et R₂ est le méthyle.

3. Un procédé pour repousser les nuisibles d'une culture, englobant :
a) La préparation d'un composé contenant une substance selon la formule (I) telle que définie dans la revendication 1 ou 2 et au moins une autre substance anti-parasite ; choisie en particulier à partir du benzoate de dénatonium et d'extraits de plantes comme l'extrait d'oignon ou l'extrait d'eucalyptus ; et
b) L'application de ce composé au-dessus du sol dans la culture ; dans laquelle la nuisance est causée par des oiseaux, des artiodactyles et des lagomorphes qui causent des dégâts de morsure aux cultures qui se trouvent au-dessus du sol.

4. Un procédé selon la revendication 1, 2 ou 3, dans lequel le composé est une formule liquide ou une formule solide.

5. Un procédé selon la revendication 1, 2 ou 3, dans lequel le composé est une formule liquide appliquée au-dessus du sol dans la culture par pulvérisation sur la culture et/ou entre les rangées de celle-ci.

6. Un procédé selon la revendication 1, 2 ou 3, dans lequel le composé est une formule liquide appliquée au-dessus du sol dans la culture par diffusion de la solution sur celle-ci, notamment sur les tiges.

7. Un procédé selon la revendication 1, 2 ou 3, dans lequel le composé est une formule solide, obtenue en imprégnant un support solide avec une substance selon la formule (I) telle que définie dans la revendication 1 ou 2.

8. Un procédé selon la revendication 7, dans lequel la formule solide est appliquée dans la culture par dispersion.
